(19) Europäisches Patentamt
European Patent Office
Office européen des brevets

(11) EP 0 761 427 A1

# (12) EUROPEAN PATENT APPLICATION

(43) Date of publication:
**12.03.1997 Bulletin 1997/11**

(51) Int. Cl.[6]: **B32B 27/18**, A01G 9/14

(21) Application number: **96108928.1**

(22) Date of filing: **04.06.1996**

(84) Designated Contracting States:
**DE ES FR**

(30) Priority: **28.08.1995 JP 218863/95**

(71) Applicant: **SUMITOMO CHEMICAL COMPANY LIMITED**
**Osaka-shi, Osaka 541 (JP)**

(72) Inventors:
- **Fujita, Tsutomu**
  **Toyonaka-shi, Osaka-fu (JP)**
- **Sakaya, Taiichi**
  **Takatsuki-shi, Osaka-fu (JP)**
- **Negawa, Hideo**
  **Shiga-gun, Shiga-ken (JP)**
- **Nakanishi, Mitsuko**
  **Osaka-shi, Osaka-fu (JP)**
- **Kudo, Aki**
  **Ibaraki-shi, Osaka-fu (JP)**

(74) Representative: **VOSSIUS & PARTNER**
**Siebertstrasse 4**
**81675 München (DE)**

## (54) Polyolefin resin covering film and method for raising plants

(57) A polyolefin resin covering film having a first layer of a polyolefin resin and second and third layers which are provided on respective sides of the first layer and made of a polyolefin resin containing 20 wt. % or less of a polar group-containing vinyl monomer, in which the polyolefin resin covering film contains 6 to 50 wt. % of a IR absorber based on the weight of the covering film, and has a IR absorbance of 70 to 85 % at 27°C, which covering film is preferably used as a covering film of a green house or tunnel for protected horticulture to raise a strong-light produce.

EP 0 761 427 A1

## Description

The present invention relates to a polyolefin resin covering film which is excellent in transparency and heat retaining property, and a method for raising plants in a green house or tunnel comprising said polyolefin resin covering film, in protected horticulture.

Hitherto, as an agricultural covering film to be used for covering a green house or a tunnel in protected horticulture, polyvinyl chloride film, a polyolefin resin film (e.g. polyethylene film, etc.) or an ethylene-vinyl acetate copolymer film is mainly used.

In particular, the polyvinyl chloride film is widely used as a covering, since it is excellent in heat retaining property, transparency, toughness, durability, and so on. However, the polyvinyl chloride film has drawbacks that a plasticizer compounded in the film bleeds out on a film surface in the use and gathers dusts, whereby the light transmission through the film is severely deteriorated to prevent the rise of a temperature in the green house, and that the polyvinyl chloride film generates hydrogen chloride gas when its waste material is burnt.

The polyolefin resin film is not satisfactory as the agricultural covering film of the green house or tunnel, since its heat retaining property is inferior to that of the polyvinyl chloride film, although its transparency is excellent.

In raising farm produces in the green house or tunnel, the sunlight reaches inside the green house or tunnel in the daytime to raise temperature of the atmosphere and ground in the green house or tunnel. During the night, the elevated temperature of the atmosphere and ground in the green house or tunnel is decreased by outside atmosphere. As the temperatures of the atmosphere and ground in the green house or tunnel is decreased to a lower temperature by the outside atmosphere during the night, the raising of the farm produces is more adversely affected. As the temperature in the green house or tunnel is decreased to a lower temperature by cooling in the night, a longer time is required to raise the temperature in the green house or tunnel by the sunlight after the sunrise. As the result, a slight difference of the temperature of the atmosphere and ground in the green house or tunnel caused by the cooling in the night results in a great difference in the growth of the farm produces to be raised in the green house or tunnel.

To avoid or suppress the adverse effects of the cooling in the night on the farm produces, it is necessary (1) to let the sunlight in the green house or tunnel as much as possible in the daytime, and (2) to increase an absorptivity of the agricultural covering film against radiation from the ground in the green house or tunnel in the night.

By the above measure (1), the temperature of the atmosphere and ground in the green house or tunnel is elevated to store a large amount of heat in the ground in the green house or tunnel, whereby the lowering of the temperature of the atmosphere or ground in the green house or tunnel by cooling in the night can be suppressed.

The sunlight heat absorbed by the ground in the green house or tunnel in the daytime is liberated from the ground in the form of radiation in the night. But, if a transmission of the radiation from the ground through the agricultural covering film is high, an effect of suppressing the temperature decrease is minimized. The above measure (2) prevents dissipation of the radiation outside the green house or tunnel, whereby a degree of lowering of the temperature of the atmosphere and ground in the green house or tunnel in the night is decreased.

The above measures (1) and (2) relate to light transmission (transmission of parallel light beams) and heat retaining property of the agricultural covering film, respectively.

To facilitate the growth of the farm produces by the protected horticulture in the green house or tunnel, it is necessary to improve the heat retaining property and the light transmission of the agricultural covering film.

Various attempts to improve the heat retaining property of the polyolefin resin film are found in JP-A-52-105953, JP-B-4-11107 and JP-B-57-34871. These patent publications disclose polyolefin resin films containing an inorganic compound such as a phosphate compound, silicon oxide, anhydrous aluminosilicate, dehydrated kaolinite, alumina, silicate, zeolite, hydrotalcite, etc. and an organic compound such as an acetal resin. However, these films have still insufficient heat retaining property or a low light transmission, or a surfactant contained in the films bleeds out on the film surface so that the light transmission of the film is decreased. Consequently, when such film is used as a agricultural covering film of the green house or tunnel for the protected horticulture to raise the farm produces, the properties of the film are still unsatisfactory.

The object of the present invention is to use a polyolefin resin film which is excellent in light transmission and heat retaining property as a covering film of a green house or tunnel in the protected horticulture.

This object has been achieved by the surprising finding of a polyolefin resin covering film comprising a first layer which comprises a polyolefin resin (Layer A) and second and third layers (Layers B and C) which are provided on respective sides of said first layer (Layer A) and comprise a polyolefin resin comprising 20 wt. % or less of a polar group-containing vinyl monomer, wherein said polyolefin resin covering film contains 6 to 50 wt. % of a IR absorber based on the weight of the covering film, and has a IR absorbance of 70 to 85 % at 27°C in terms of a radiation absorbing energy at a film thickness of 75 $\mu$m with the black-body radiation energy being 100 %.

The polyolefin resin covering film of the present invention is preferably used as a covering film of a green house or tunnel for protected horticulture to raise a strong-light produce.

The polyolefin resin to be used to form Layer A of the polyolefin resin covering film according to the present invention may be a homopolymer of an $\alpha$-olefin, a copolymer of two or more $\alpha$-olefins, or a copolymer of at least one $\alpha$-olefin

as a main component and at least one other monomer. Preferably, the α-olefin has 2 to 10 carbon atoms.

Specific examples of the polyolefin resin are polyethylene, polypropylene, ethylene-α-olefin copolymers (e.g. ethylene-propylene copolymers, ethylene-butene-1 copolymers, ethylene-4-methyl-1-pentene copolymers, ethylene-hexene-1 copolymers, ethylene-octene-1 copolymers, etc.), ethylene-vinyl acetate copolymers, ethylene-acrylic acid copolymers, ethylene-methyl methacrylate copolymers, ethylene-vinyl acetate-methyl methacrylate copolymers, ionomer resins, and so on.

Among these resins, polyethylene, in particular, a low density polyethylene having a density of 0.93 $g/cm^3$ or less, the ethylene-α-olefin copolymers, and the ethylene-vinyl acetate copolymers containing 30 wt. % or less of vinyl acetate are preferred, since they are excellent in transparency and flexibility, and can provide an economical film.

Each of Layers B and C of the polyolefin resin covering film according to the present invention is formed from a polyolefin resin comprising 20 wt. % or less of the polar group-containing vinyl monomer to improve the processability, workability, transparency, and so on of the covering film.

The polar group-containing monomer is intended to mean a vinyl monomer having an element other than carbon and hydrogen atoms. Examples of such vinyl monomer are vinyl acetate, acrylic acid, methacrylic acid, acrylates (e.g. methyl acrylate, butyl acrylate, 2-hydroxyethyl acrylate, etc.), methacrylates (e.g. methyl methacrylate, butyl methacrylate, 2-hydroxyethyl methacrylate, etc.), and so on. Specific examples of such polyolefin resin comprising the polar group-containing vinyl monomer are ethylene-vinyl acetate copolymers, ethylene-acrylic acid copolymers, ethylene-methyl methacrylate copolymers, ethylene-vinyl acetate-methyl methacrylate copolymers, ionomer resins, and so on. Among these resins, the ethylene-vinyl acetate copolymers are preferred.

When a content of the polar group-containing vinyl monomer exceeds 20 wt. % of the polyolefin resin, the processability of the film is deteriorated, or the films are fusion bonded. Preferably, the content of the polar group-containing vinyl monomer is from 0 to 20 wt. %, more preferably from 3 to 13 wt. %.

Examples of the polyolefin resin comprising no polar group-containing monomer are polyethylene, polypropylene, and ethylene-a-olefin copolymers (e.g. ethylene-propylene copolymers, ethylene-butene-1 copolymers, ethylene-4-methyl-1-pentene copolymers, ethylene-hexene copolymers, ethylene-octene copolymers, etc.) and so on. Among them, low density polyethylene having a density of 0.93 $g/cm^3$ or less, and the ethylene-α-olefin copolymers are preferably used.

When the polyolefin resin of Layer A comprises a comonomer which is the same as the polar group-containing vinyl monomer, a content of the comonomer in the polyolefin resin of Layer A is preferably different from the content of the polar group-containing vinyl monomer. Preferably, the content of the polar group-containing vinyl monomer in the polyolefin resin of Layers B and C is less than that of the comonomer in the polyolefin resin of Layer A.

Each of Layers A, B and C may contain any additive other than additives described below (cf. "Technique of Separation and Analysis of Polymer Additives" and "Supplement Volume" therefor, edited by Tanaka et al, and published by NIHON KAGAKU JOHO KABUSHIKIKAISHA, 1987, Japan; "Practical Handbook on Plastic and Rubber Additives" edited by Goto et al, and published by KAGAKU KOGYO KABUSHIKIKAISHA, 1970, Japan).

The respective additives may be used independently or in combination of two or more of them.

The polyolefin resin covering film of the present invention is a multilayer film comprising Layer A and Layers B and C which are provided on the respective sides of Layer A.

When an anti-fogging layer is not formed on the polyolefin resin covering film, Layers B and C are preferably the outermost layers. When the anti-fogging layer is formed, it is preferably formed on one or both of Layers B and C.

Layer A may have a multilayer structure.

Kinds of the resins, and/or kinds and amounts of the additives in Layers A, B and C may be different.

Preferably, the polyolefin resin covering film may have a two-kind three-layer structure, a three-kind three-layer structure, a three-kind five-layer structure, a four-kind five-layer structure, or a five-kind five-layer structure.

When the polyolefin resin covering film is used as a covering film of an agricultural facility, the layer facing outside of the facility is often subjected to dust-resistant treatment, while the layer facing inside of the facility is often subjected to anti-sticking treatment and/or mist-preventing treatment.

A total thickness of the polyolefin resin covering film is usually from 0.02 to 0.3 mm, preferably from 0.03 to 0.2 mm in view of joint processability and covering workability of the film.

A ratio of each of Layers B and C to Layer A is usually from 1:9 to 9:1. In view of the moldability of the covering film, the ratio is preferably from 2:8 to 8:2. In view of the transparency and strength of the covering film, the ratio is more preferably from 7:3 to 3:7. The thicknesses of Layers B and C are not necessarily the same.

The IR absorbance of the polyolefin resin covering film according to the present invention is a criterion of the heat retaining property, and has an influence on the growth of the farm produces.

When the IR absorbance is made lager than 85 % by the used of an inorganic IR absorber, a large amount of the IR absorber should be compounded in the polyolefin resin covering film. Thereby, the processability, strength and light transmission of the film are deteriorated, and the production cost of the film increases unpreferably.

In view of the growth of the farm produces, and the light transmission, strength and cost of the covering film, the IR absorbance is preferably from 72 to 85 %, more preferably from 74 to 85 %. To achieve the IR absorbance in the range

between 70 % and 85 %, a content of the inorganic IR absorber is from 6 to 50 wt. %, preferably from 6 to 25 wt. %, more preferably from 8 to 25 wt. % based on the weight of the polyolefin resin covering film, and a content of the organic IR absorber is from 6 to 50 wt. % based on the weight of the polyolefin resin covering film.

The term "HAZE" means a transmission of parallel rays of light, and the smaller HAZE value means higher transmission of the parallel rays of light. As discussed above, as the transmission of the parallel rays of light is higher, a larger amount of the sunlight reaches inside the green house or tunnel in the daytime to raise the temperature of the atmosphere and ground in the green house or tunnel higher, and increase the heat retaining property in the night. The higher transmission of the parallel rays of light has better influence on the growth of the strong-light produces which prefer the light beam which goes straight such as plants of *Solanaceae*. Examples of the strong-light produces are plants of *Solanaceae*, green pepper, melon, water melon, strawberry, etc. When the covering films have the same heat retaining property, one having the smaller HAZE value achieves the better growth of the produces, in particular, the strong-light produces. Then, the covering film having the smaller HAZE value has better effects on the raising of the produces.

In view of the transmission of parallel light beams, the HAZE value is preferably from 5 to 25 %, more preferably from 5 to 15 % under the conditions which will be explained in the measurement of "HAZE value".

In view of the long-term maintenance of transparency of the film and prevention of deterioration of the quality (transparency) of the film after long period storage, ΔHAZE (a difference between the HAZE value just after production and that after storing) is preferably 110 % or less, more preferably 80 % or less, in particular 20 % or less under the conditions which will be explained in the measurement of "ΔHAZE".

Examples of the IR absorber are inorganic materials such as metal oxides (e.g. magnesium oxide, calcium oxide, aluminum oxide, silicon oxide, titanium oxide, etc.), hydroxides (e.g. lithium hydroxide, magnesium hydroxide, calcium hydroxide, aluminum hydroxide, etc.), carbonates (e.g. magnesium carbonate, calcium carbonate, etc.), sulfates (e.g. potassium sulfate, magnesium sulfate, calcium sulfate, zinc sulfate, aluminum sulfate, etc.), phosphates (e.g. lithium phosphate, sodium phosphate, potassium phosphate, calcium phosphate, etc.), silicates (e.g. magnesium silicate, calcium silicate, aluminum silicate, titanium silicate etc.), aluminates (e.g. sodium aluminate, potassium aluminate, calcium aluminate, etc.), aluminosilicates (e.g. sodium aluminosilicate, potassium aluminosilicate, calcium aluminosilicate, etc.), double hydroxides (e.g. hydrotalcite, lithium aluminum double hydroxide, etc.), kaolin, clay, talc, and so on; and organic materials such as polyacetal, EVAL (ethyl-vinyl alcohol copolymer), and so on. These materials may be used independently or in admixture of two or more of them.

An example of the hydrotalcite compound is a compound of the formula (I):

$$M^{2+}{}_{1-x}Al_x(OH)_2(A^{n-})_{x/n}\cdot mH_2O \qquad (I)$$

wherein $M^{2+}$ is a divalent ion of a metal selected from the group consisting of magnesium, calcium and zinc, x is a number larger than 0 and smaller than 0.5, m is a number of 0 to 2, $A^{n-}$ is a n-valent anion, and n is an integer of 1 to 5.

The n-valent anion is not limited, and its preferred examples are $Cl^-$, $Br^-$, $I^-$, $NO_3^-$, $ClO_4^-$, $SO_4^{2-}$, $CO_3^{2-}$, $SiO_3^{2-}$, $HPO_4^{3-}$, $HBO_4^{3-}$, $PO_4^{3-}$, $Fe(CN)_4^{3-}$, $Fe(CN)_4^{4-}$, $CH_3COO^-$, $C_6H_4(OH)COO^-$, $(COO)_2^{2-}$, terephthalate ion, naphthalenesulfonate ion, etc.

Specific examples of the hydrotalcite are natural hydrotalcite ($Mg_{0.75}Al_{0.25}(OH)_2(CO_3)_{0.125}\cdot 0.5H_2O$), synthetic hydrotalcite ($Mg_{0.69}Al_{0.31}(OH)_2(CO_3)_{0.15}\cdot 0.54H_2O$. Trade name DHT-4A manufactured by KYOWA Chemical Industries, Ltd.), and so on.

A specific example of the lithium aluminum double hydroxide is a compound of the formula:

$$Li^+(Al^{3+})_2(OH^-)_6\cdot(A^{n-})_{1/n}\cdot kH_2O \qquad (II)$$

wherein $A^{n-}$ is a n-valent anion, n is an integer of 1 to 5, k is a number of 0 to 3.

The n-valent anion is not limited, and its preferred examples are the same as those exemplified in connection with the formula (I).

When the inorganic IR absorber is used, preferably it has a refractive index which is close to that of the polyolefin resin to be used in view of the light transmission. In view of the heat retaining property, it is important for the IR absorber to have the light absorbing characteristics in a wide range of wavelength. In view of the heat retaining property, the hydrotalcite compounds, the lithium alL uminum double hydroxides and the aluminosilicates are preferred.

An average particle size of the inorganic IR absorber is usually 5 μm or less, preferably from 0.05 to 3 μm, more preferably from 0.1 to 1 μm. The inorganic IR absorber may be surface treated with a higher aliphatic acid or its metal salt to improve the dispersibility in the polyolefin resin.

The polyolefin resin covering film according to the present invention may contain a hindered amine compound.

Preferred examples of the hindered amine compound to be used in the present invention are 2,2,6,6-tetraalkylpiperidine derivatives which preferably have a substituent at the 4-position. Examples of the substituent at the 4-position are carboxylic acid groups, alkoxy groups, alkylamino groups, and so on. The piperidine ring may have an alkyl group on the nitrogen atom.

Specific examples of the hindered amine compound are the following compounds (1) to (22):

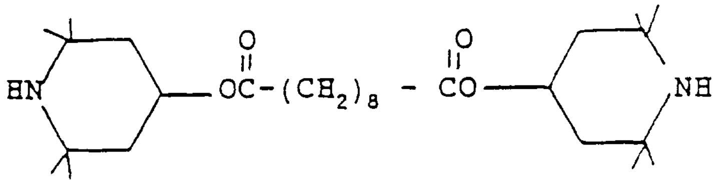
(1)

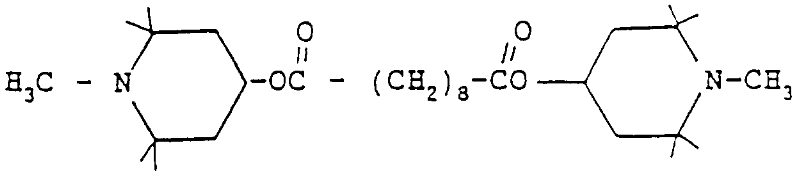
(2)

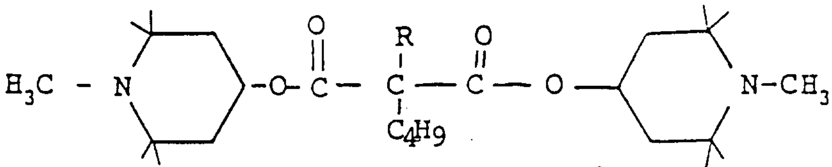
(3)

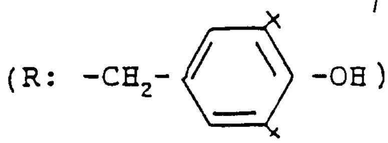

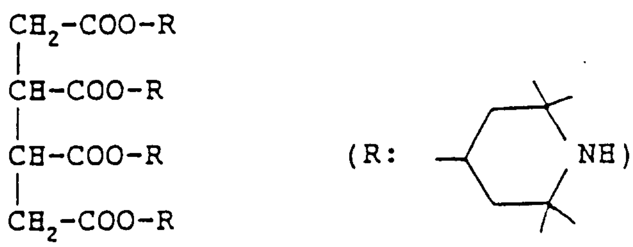
(4)

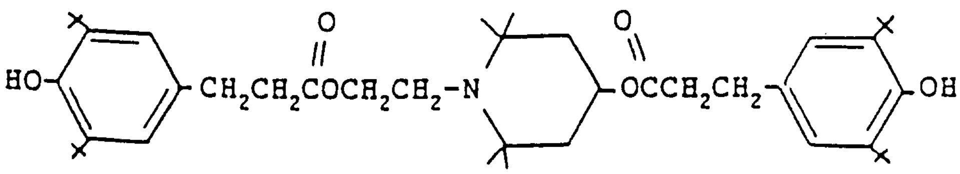
(5)

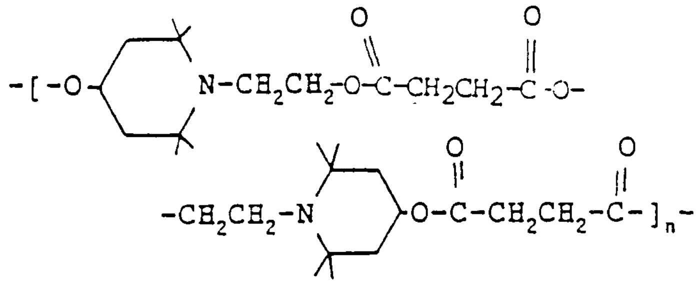

(6)

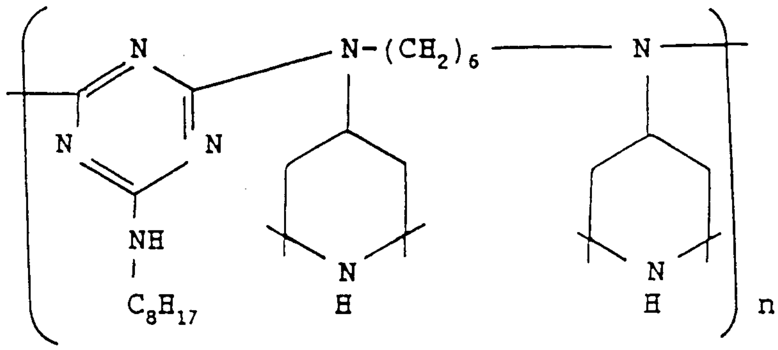

(7)

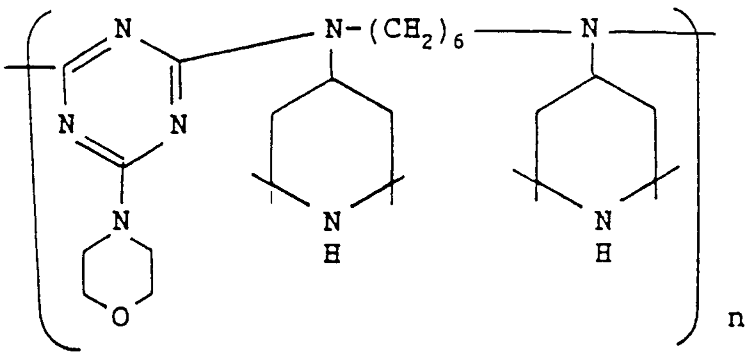

(8)

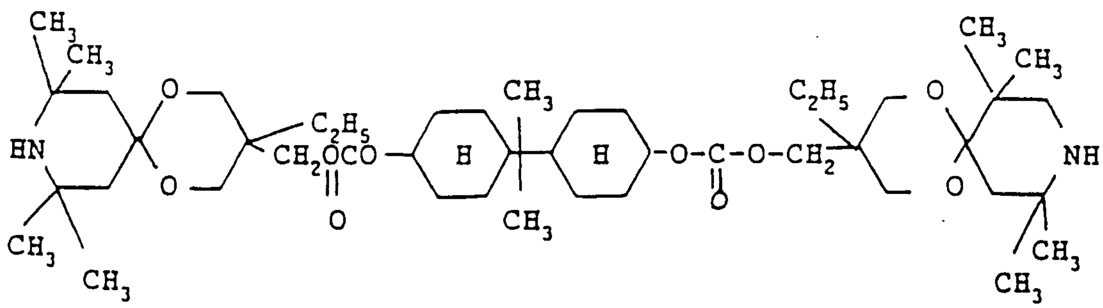

(9)

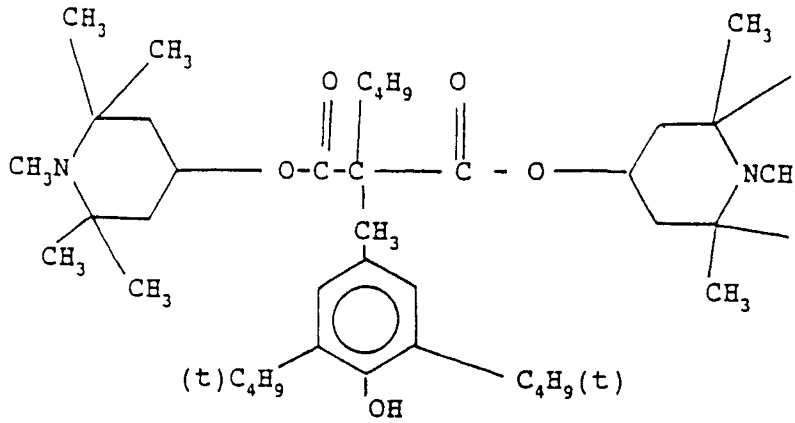

(10)

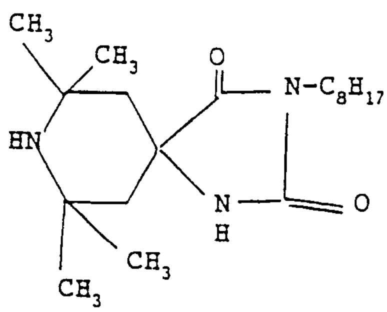

(11)

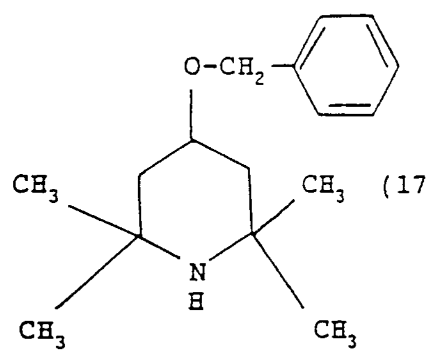

(17)

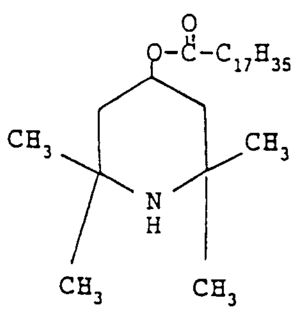

(12)

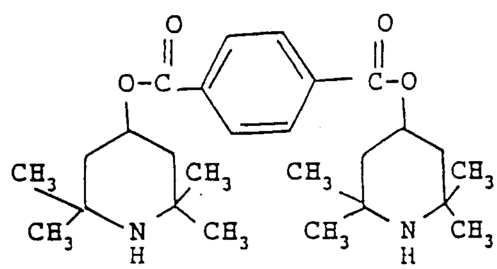

(18)

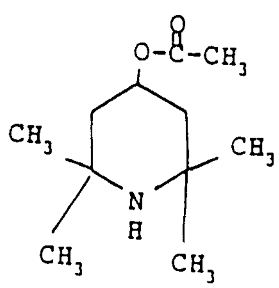

(13)

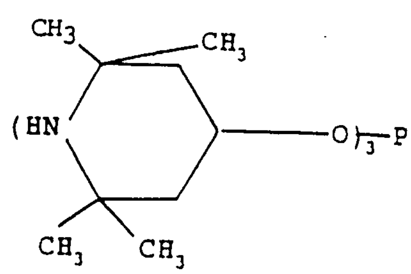

(19)

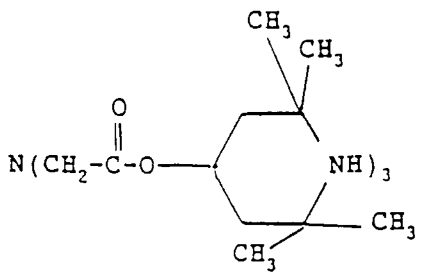

(14)

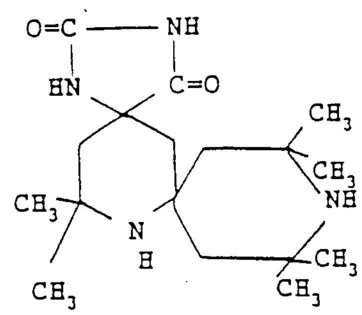

(20)

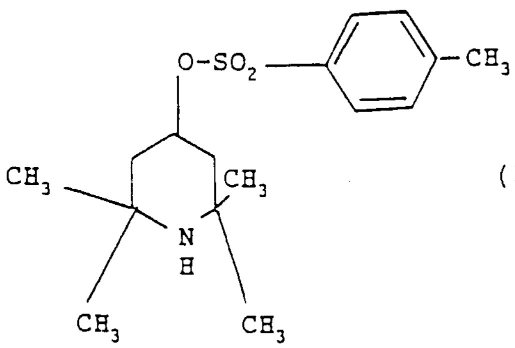

(15)

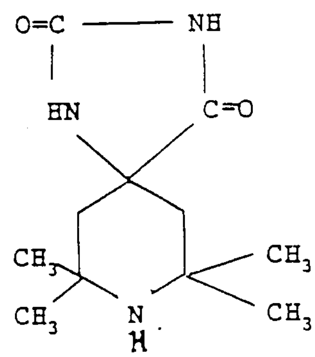

(21)

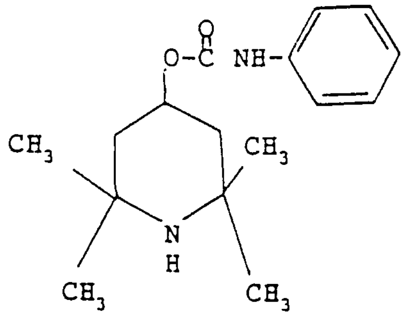

(16)

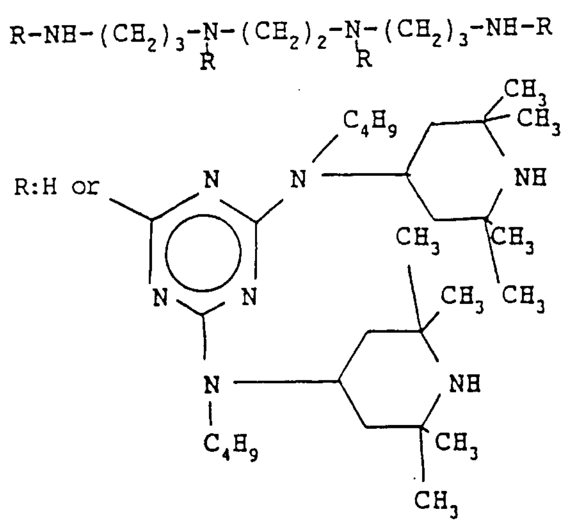

R:H or

(22)

They may be used independently or in admixture of two or more of them.

An amount of the hindered amine compound is preferably from 0.02 to 5 wt. %, more preferably from 0.1 to 2 wt. % based on the whole weight of the polyolefin resin covering film, in view of the improvement of weather resistance of the covering film and suppression of blooming.

The polyolefin resin covering film according to the present invention may further contain a UV absorber.

Examples of the UV absorber are benzophenone UV absorbers, benzotriazole UV absorbers, benzoate UV absorbers, cyanoacrylate UV absorbers, and so on.

Specific examples of such UV absorbers are the following compounds of the formulas (23) to (31):

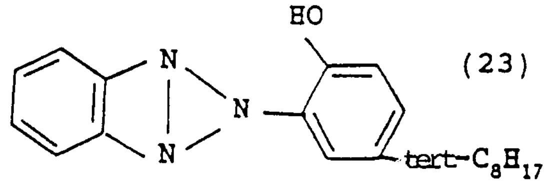

(23)

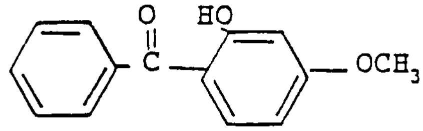

(28)

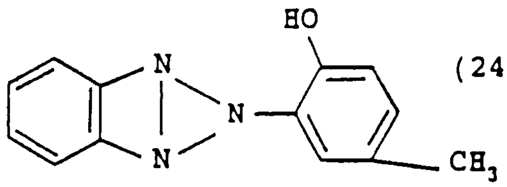

(24)

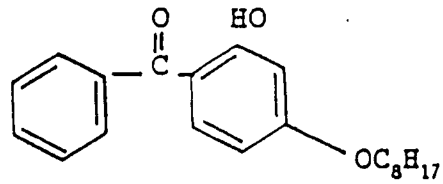

(29)

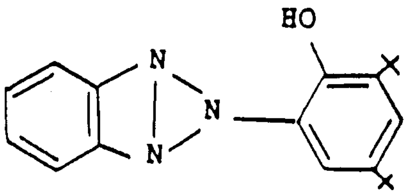

(25)

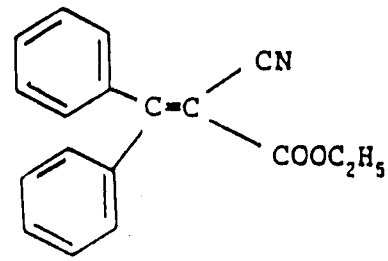

(30)

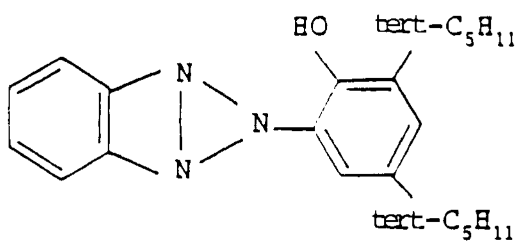

(26)

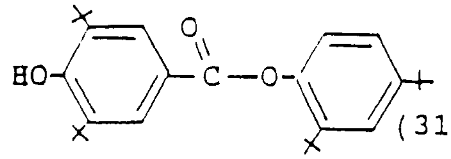

(31)

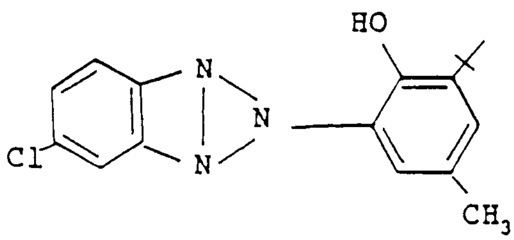

(27)

The UV absorbers may be used independently or in admixture of two or more of them.

An amount of the UV absorber is preferably from 0.01 to 3 wt. %, more preferably from 0.05 to 1 wt. % based on the whole weight of the covering film, in view of the improvement of weather resistance of the film and suppression of blooming.

The polyolefin resin covering film according to the present invention may contain an anti-dripping agent.

The anti-dripping agent includes a solid one and a liquid one at ambient temperature (23°C).

Examples of the solid anti-dripping agent are nonionic surfactants such as sorbitan fatty acid ester surfactants (e.g. sorbitan monostearate, sorbitan monopalmitate, sorbitan monobehenate, etc.), glycerol fatty acid esters (e.g. glycerol monolaurate, glycerol monopalmitate, glycerol monostearate, diglycerol distearate, triglycerol monostearate, etc.), polyethylene glycol base surfactants (e.g. polyethylene glycol monopalmitate, polyethylene glycol monostearate, etc.), adducts of alkylphenols with alkylene oxides, esters of organic acids with sorbitan/glycerol condensates, and so on.

When the anti-dripping agent which is in the liquid form at room temperature is compounded in the polyolefin resin of the covering film according to the present invention, it suppress the deterioration of light transmission which appears in the initial stage of the production of the film during storage or use of the film. Accordingly, it is preferred to compound at least one liquid anti-dripping agent in the polyolefin resin.

Examples of the liquid anti-dripping agent are glycerol fatty acid esters (e.g. glycerol monooleate, diglycerol monooleate, diglycerol sesquioleate, tetraglycerol monooleate, hexaglycerol monooleate, glycerol pentaoleate, diglycerol pentaoleate, tetraglycerol pentaoleate, hexaglycerol pentaoleate, tetraglycerol monolaurate, hexaglycerol monolaurate, etc.), sorbitan fatty acid esters (e.g. sorbitan monooleate, sorbitan dioleate, sorbitan monolaurate, etc.), and so on. An amount of the liquid anti-dripping agent is preferably from 0.2 to 3 wt. %, more preferably from 0.5 to 2 wt. % based on the whole weight of the covering film.

A total amount of the anti-dripping agent is preferably from 0.5 to 4 wt. %, more preferably from 1.5 to 3 wt. %. In particular, the total amount of the anti-dripping agent is from 2.2 to 2.8 wt. % in view of the long-term anti-dripping property.

To impart a mist-preventing property to the polyolefin resin covering film according to the present invention, a mist-preventing agent can be compounded in the polyolefin resin.

Examples of the mist-preventing agent are fluorine compounds having a perfluoroalkyl group, ω-hydrofluoroalkyl group, and the like, in particular, fluorine-containing surfactants, silicon compounds having an alkylsiloxane group, in particular, silicon-containing surfactants, and so on.

An amount of the mist-preventing agent is preferably from 0.01 to 3 wt. %, more preferably from 0.02 to 1 wt. %.

To maintain the transparency of the polyolefin resin covering film according to the present invention for a long time, in addition to the compounding of the above liquid anti-dripping agent, an anti-fogging coating (an anti-sticking coating) may be formed at least on the layer facing the inside of the green house or tunnel.

Examples of the anti-fogging coating are a coating film of an inorganic oxide sol such as colloidal silica and colloidal alumina disclosed in JP-B-49-32668 and JP-B-50-11348, a coating film of a mixture of such inorganic oxide sol and an organic compound (e.g. a surfactant or a resin) disclosed in JP-B-63-45432, JP-B-63-45717 and JP-B-64-2158 and JP-A-3-207643, a coating film formed from a liquid comprising a surfactant, a film of a hydrophilic resin (e.g. polyvinyl alcohol, polysaccarides, polyacrylic acid, etc.), and so on.

The anti-fogging coating may be formed by coating, or laminating a separately formed film of the anti-sticking coating on the polyolefin resin covering film. A coating method is not critical. Two or more anti-fogging coatings may be formed.

The polyolefin resin covering film according to the present invention may be produced as follows:

To the polyolefin resin, a determined amount of the IR absorber, and optionally the anti-dripping agent, the hindered amine compound, the UV absorber, a heat stabilizer, a weathering agent, etc. are mixed and compounded using a conventional mixing and kneading apparatus such as a ribbon blender, a super mixer, a Banbury mixer, a single or twin screw extruder, and so on to obtain the polyolefin resin composition for Layer A. The polyolefin resin composition for Layers B and C may be prepared in the same way. Then, the resin compositions are molded by a conventional molding method for the production of a laminate film such as extrusion T-die film molding, inflation film molding and the like so that Layer A is interposed between Layers B and C to obtain the covering film.

Alternatively, each of Layers A, B and C is produced by the above method, and then Layer B, Layer A and Layer C are laminated with inserting an adhesive between the layers.

The polyolefin resin covering film of the present invention is used as a covering of a green house or tunnel used in the protected horticulture.

The green house or tunnel for protected horticulture is employed by farmers to raise the farm produces, in particular, the above described strong-light produces. When an inside curtain is used, it is preferably made of the polyolefin resin covering film according to the present invention.

According to the present invention, the method for raising the plants in the green house or tunnel for protected horticulture comprises seeding the ground and raising plants, in particular, the strong-light produces, in the green house or tunnel for protected horticulture which is covered with the polyolefin resin covering film according to the present invention.

The polyolefin resin covering film according to the present invention is excellent in the light transmission and has the heat retaining property as good as the polyvinyl chloride film.

Many of the agricultural polyolefin resin multilayer films which are commercially sold and contain the IR absorber suffer from the decrease of the light transmission with time because of bleeding out of the anti-dripping agent on the film surface. But, the polyolefin resin covering film containing the anti-dripping agent which is in the liquid state at room temperature hardly suffers from the decrease of the light transmission with time, and can maintain the good light transmission for a long time.

When the polyolefin resin covering film according to the present invention is extended over the green house or tunnel and the plants are grown therein, a degree of growth (namely a yield) of the produces is equal to or higher than that attained by the use of the conventional polyvinyl chloride resin film.

Further, the polyolefin resin covering film does not cause any problem in waste disposal which is a fatal problem of the polyvinyl chloride resin film, and therefore, it is friendly to the environment. In addition, the polyolefin resin covering film is cheaper and has better workability and cold resistance than the polyvinyl chloride resin film, and can be effectively used in raising the plants.

## Examples

The present invention will be explained in detail by the following examples which will not limit the scope of the present invention in any way.

In Examples and Comparative Examples, the properties of the covering films were measured as follows:

### Light transmission: HAZE value

Using a HAZE meter manufactured by SUGA TEST INSTRUMENTS Co., Ltd.), a transmission of light and a HAZE value were measured. The HAZE value just after production means a value measured within one hour after the film production. When the film was left more than one hour after the production, it was washed with acetone, and then subjected to the measurements within one hour after washing.

### Light transmission after storing: ΔHAZE

After storing the covering film at 23°C, 50 %RH for 90 days, the HAZE value was measured, and a difference between the HAZE value just after production and that after storing (ΔHAZE) was calculated.

### IR absorbance

The IR absorbance was measured and calculated according to the following definition of a radiation absorbing energy and the measuring method.

A radiation absorbing energy of the film at 27°C was measured and then its ratio to the black-body radiation energy (which is 100 %) was calculated.

With an absorbance of a sample at the absolute temperature of 300K being $A_{\lambda \cdot T}$, a radiation absorbing energy $E_{\lambda \cdot T}$ of the sample in the wavelength range between 2.27 and 30.3 µm was calculated according to the following equation:

$$E_{A \cdot T} = \int_{2.27}^{30.3} A_{\lambda \cdot T} \cdot J_{\lambda \cdot T} \cdot d\lambda \ (\mathrm{W/cm^3 \cdot deg.}) \qquad \text{Equation}$$

wherein $J_{\lambda \cdot T}$ is a distribution of intensifies of the black-body radiation which follows the Planck's law of radiation. $J_{\lambda \cdot T}$ is expressed as follows:

$$J_{\lambda \cdot T} = (C_1/\lambda^5)(e^{C2/\lambda \cdot T} - 1)^{-1}$$

wherein

$C_1 = 3.7402 \times 10^{-12}$ (W/cm$^2$)
$C_2 = 1.43848$ (cm·deg)
$\lambda$ = wavelength (cm)
T = absolute temperature, 300K.

An absorbance $A_{\lambda \cdot T}$ of the sample was calculated from the IR spectrum which was measured with a IR spectrophotometer at 300K according to the following equation:

$$A_{\lambda \cdot T} = 1 - J_{\lambda}/J_{0\lambda}$$

wherein $J_{0\lambda}$ is an energy of incident light, and $J_{\lambda}$ is an energy of transmitted light.

The radiation absorbing energies were integrated in the range between 2.27 µm and 30.3 µm with an interval of

0.02 μm.

The IR spectrum was measured by a conventional method using a Fourier transformation type IR spectrophotometer.

Mist-preventing test

A piece of film was adhered to an acrylic resin frame having a length of 50 cm and a width of 60 cm with a double-coated adhesive tape, and placed horizontally over a constant temperature water bath kept at 40°C which was set in a constant temperature room kept at 23°C, with facing a test surface downward. After thoroughly wetting the test surface, iced water was contacted to a back surface opposite the test surface, and then a degree of fog generated between the test surface and a water surface of the water bath, and a time in which the fog was cleared were observed with eyes, and ranked according to the following criteria:

○: A degree of fog generation is small, and the fog disappears in a short time.
Δ: A degree of fog generation is large, and it takes a long time till the fog disappears.
X: A degree of fog generation is very large, and it takes a long time till the fog disappears.

Anti-dripping test

A piece of film was adhered to an acrylic resin frame having a length of 34 cm and a width of 5 cm with a double-coated adhesive tape, and placed over a constant temperature water bath which was set in an environmental testing room kept at a constant temperature with facing a test surface downward and slanting the film at 15 degrees from the horizontal plane. The temperature conditions of the environmental testing room and the constant temperature water bath were 3°C and 20°C, respectively in the low temperature test, or 20°C and 40°C, respectively in the high temperature test. A state of water droplets was observed and ranked according to the following criteria:

○: The test surface of the film is uniformly wet.
△: Water droplets adhere partly to the test surface of the film.
X: The whole test surface is covered by water droplets and whitely clouded.

Weathering test

A test piece of a film in the shape of JIS No. 1 dumbbell was aged in a Sunshine Weather-O-meter (manufactured by SUGA TEST INSTRUMENTS Co., Ltd.) at a black panel temperature of 63°C for various periods of time. Then, the aged test piece was subjected to a tensile test using AUTOGRAPH DSS 100 (manufactured by SHIMADZU CORPORATION) to measure an elongation (%), and a weathering test time at which the elongation was decreased to a half of that of the unaged test piece (a half-life period of weather resistance) was recorded. The longer half-life period means better weather resistance. A passing level in this test is 1000 hours of the half-life period of weather resistance.

The elongation (%) was calculated according to the following formula:

Elongation (%) = [(Distance between reference lines (mm) at breakage - distance between reference lines (mm) before tensile test) x 100]/(distance between reference lines (mm) before tensile test)

Example 1

To an ethylene-vinyl acetate copolymer (Trade name: EVATATE H 2020 manufactured by Sumitomo Chemical Co., Ltd. Vinyl acetate content: 15 wt. %), 0.6 wt. % of a hindered amine compound (Trade name: TINUVIN 622-LD manufactured by Ciba-Geigy), 16.0 wt. % of a hydrotalcite compound (Trade name: DHT 4A manufactured by KYOWA Chemical Industries, Ltd.) as a IR absorber, 0.1 wt % of a UV absorber (Trade name: SUMISORB 130 manufactured by Sumitomo Chemical Co., Ltd.), 0.1 wt. % of an antioxidant (Trade name: IRGANOX 1010 manufactured by Ciba-Geigy), 0.2 wt. % of mono-glycerol monostearate, 1.0 wt. % of diglycerol distearate and 0.8 wt. % of diglycerol sesquioleate as anti-dripping agents, and 0.2 wt. % of stearic acid amide as a lubricant (each wt. % being based on the whole resin composition) were added and kneaded by a Banbury mixer at 130°C for 5 minutes. Then, the mixture was pelletized by a pelletizer to obtain pellets of the composition. This composition will be referred to as "Resin Composition (1)".

Separately, to an ethylene-vinyl acetate copolymer (Trade name: EVATATE D 2011 manufactured by Sumitomo Chemical Co., Ltd. Vinyl acetate content: 5 wt. %), 0.6 wt. % of the hindered amine compound (Trade name: TINUVIN 622-LD manufactured by Ciba-Geigy), 0.1 wt % of the UV absorber (Trade name: SUMISORB 130 manufactured by

Sumitomo Chemical Co., Ltd.), 0.1 wt. % of the antioxidant (Trade name: IRGANOX 1010 manufactured by Ciba-Geigy), 0.2 wt. % of monoglycerol monostearate, 1.0 wt. % of diglycerol distearate and 0.8 wt. % of diglycerol sesquioleate as anti-dripping agents, 0.2 wt. % of stearic acid amide as a lubricant and 0.10 wt. % of silicon oxide as an anti-blocking agent (each wt. % being based on the whole resin composition) were added and kneaded by a Banbury mixer at 130°C for 5 minutes. Then, the mixture was pelletized by a pelletizer to obtain pellets of the composition. This composition will be referred to as "Resin Composition (2)".

Using the Resin Composition (1) as a composition of Layer A (intermediate layer) and the Resin Composition (2) as a composition of Layers B and C (outer layers), a laminated film comprising Layer A having a thickness of 0.045 mm, and Layers B and C each having a thickness of 0.015 mm (total thickness of 0.075 mm) was prepared by an inflation film molding machine, and subjected to the above measurements of the properties. The result is shown in Table 1.

Example 2

In the same manner as in Example 1 except that the amount of the IR absorber in the Resin Composition (1) was changed to 20 wt. %, a laminated film was produced and subjected to the various tests. The results are shown in Table 1.

Example 3

In the same manner as in Example 1 except that the IR absorber in the Resin Composition (1) was changed to a lithium-aluminum double hydroxide (Trade name: MIZUKALAK manufactured by MIZUSAWA Chemical Industries, Ltd.), a laminated film was produced and subjected to the various tests. The results are shown in Table 1.

Example 4

In the same manner as in Example 1 except that the IR absorber in the Resin Composition (1) was changed to an aluminosilicate (Trade name: SILTON AMT-08 manufactured by MIZUSAWA Chemical Industries, Ltd.), a laminated film was produced and subjected to the various tests. The results are shown in Table 1.

Example 5

In the same manner as in Example 1 except that the IR absorber in the ethylene-vinyl acetate copolymer in the Resin Composition (1) was changed to EVATATE H 2031 (manufactured by Sumitomo Chemical Co., Ltd. Vinyl acetate content: 19 wt. %), a laminated film was produced and subjected to the various tests. The results are shown in Table 2.

Example 6

In the same manner as in Example 1 except that the anti-dripping agents in each of the Resin Compositions (1) and (2) were changed to 0.4 wt. % of monoglycerol monostearate and 1.6 wt. % of diglycerol distearate, a laminated film was produced and subjected to the various tests. The results are shown in Table 2.

Example 7

In the same manner as in Example 3 except that 0.1 wt. % of a fluorine-containing surfactant (Trade name: UNIDAIN DS403 manufactured by DAIKIN Industries, Ltd.) was added as an mist-preventing agent to each of the Resin Compositions (1) and (2), a laminated film was produced and subjected to the various tests. The results are shown in Table 2.

Example 8

In the same manner as in Example 1 except that no anti-dripping agent was used in the Resin Compositions (1) and (2), a laminated film was produced and subjected to the various tests. The results are shown in Table 2.

Example 9

In the same manner as in Example 3 except that thicknesses of Layer A and each of Layers B and C were changed to 0.06 mm and 0.02 mm, respectively and then the total thickness of the film was changed to 0.1 mm, a laminated film was produced and subjected to the various tests. The results are shown in Table 3.

Example 10

In the same manner as in Example 3 except that thicknesses of Layer A and each of Layers B and C were changed to 0.09 mm and 0.03 mm, respectively and then the total thickness of the film was changed to 0.15 mm, a laminated film was produced and subjected to the various tests. The results are shown in Table 3.

Example 11

To an ethylene-vinyl acetate copolymer (Trade name: EVATATE H 2020 manufactured by Sumitomo Chemical Co., Ltd. Vinyl acetate content: 15 wt. %), 0.6 wt. % of a hindered amine compound (Trade name: TINUVIN 622-LD manufactured by Ciba-Geigy), 16.0 wt. % of a hydrotalcite compound (Trade name: DHT 4A manufactured by KYOWA Chemical Industries, Ltd.) as a IR absorber, 0.1 wt % of a UV absorber (Trade name: SUMISORB 130 manufactured by Sumitomo Chemical Co., Ltd.) and 0.1 wt. % of an antioxidant (Trade name: IRGANOX 1010 manufactured by Ciba-Geigy) (each wt. % being based on the whole resin composition) were added and kneaded by a Banbury mixer at 130°C for 5 minutes. Then, the mixture was pelletized by a pelletizer to obtain pellets of the composition. This composition will be referred to as "Resin Composition (3)".

Separately, to an ethylene-vinyl acetate copolymer (Trade name: EVATATE D 2011 manufactured by Sumitomo Chemical Co., Ltd. Vinyl acetate content: 5 wt. %), 0.6 wt. % of the hindered amine compound (Trade name: TINUVIN 622-LD manufactured by Ciba-Geigy), 0.1 wt % of the UV absorber (Trade name: SUMISORB 130 manufactured by Sumitomo Chemical Co., Ltd.) and 0.1 wt. % of the antioxidant (Trade name: IRGANOX 1010 manufactured by Ciba-Geigy) (each wt. % being based on the whole resin composition) were added and kneaded by a Banbury mixer at 130°C for 5 minutes. Then, the mixture was pelletized by a pelletizer to obtain pellets of the composition. This composition will be referred to as "Resin Composition (4)".

Using the Resin Composition (3) as a composition of Layer A (intermediate layer) and the Resin Composition (4) as a composition of Layers B and C (outer layers), a laminated film comprising Layer A having a thickness of 0.06 mm, and Layers B and C each having a thickness of 0.02 mm (total thickness of 0.1 mm) was prepared by an inflation film molding machine.

On the inside surface (Layer C side) of the laminated film which had been corona discharged with a corona discharging machine (manufactured by SOFTAL), an anti-fogging covering film was formed as follows:

A 1 % aqueous solution of polyvinyl alcohol (POVAL 217 manufactured by KURARAY. Saponification degree of 88.5 %; polymerization degree of 1700) was coated on the corona discharged surface so that a solid component amount was about 0.1 g/m$^2$, and air dried at room temperature.

Then, the film was subjected to the above various tests. The result is shown in Table 5.

Example 12

In the same manner as in Example 11 except that an anti-fogging covering film was formed on the corona discharged surface of the film as described below, a laminated film was produced:

A 0.1 % aqueous solution of cetyltrimethylammonium chloride was coated on the corona discharged surface so that a solid component amount was about 0.1 g/m$^2$, and air dried at room temperature.

Then, the film was subjected to the various tests. The results are shown in Table 5.

Example 13

In the same manner as in Example 11 except that an anti-fogging covering film was formed on the corona discharged surface of the film as described below, a laminated film was produced:

Alumina sol (Trade name: ALUMINA SOL 520 manufactured by NISSAN CHEMICAL Co., Ltd. Solid content of 20 %), colloidal silica (Trade name: SNOWTEX 20 manufactured by NISSAN CHEMICAL Co., Ltd. Solid content of 20 %), sodium dodecylbenzenesulfonate (Trade name: NEOPELEX F25 manufactured by KAO Corporation) and sodium decanoate (manufactured by NAKALAI TESQUE) were diluted with water so that the solid contents became 1.6 %, 0.4 %, 0.08 % and 0.08 %, respectively to prepared a coating liquid. Then, the coating liquid was coated on the corona discharged surface so that a total solid component amount was about 0.1 g/m$^2$, and air dried at room temperature.

Then, the film was subjected to the various tests. The results are shown in Table 5.

Comparative Example 1

In the same manner as in Example 1 except that the amount of the hydrotalcite compound as the IR absorber was changed to 10 wt. %, a laminated film was produced and subjected to the various tests. The results are shown in Table 3.

Comparative Example 2

In the same manner as in Example 1 except that the amount of the hydrotalcite compound as the IR absorber was changed to 10 wt. % and the anti-dripping agents in each of the Resin Compositions (1) and (2) were changed to 0.4 wt. % of monoglycerol monostearate and 1.6 wt. % of diglycerol distearate, a laminated film was produced and subjected to the various tests. The results are shown in Table 2.

Comparative Example 3

In the same manner as in Example 1 except that silicon oxide (Trade name: SNOW MARK SP-3 manufactured by KINSEI MATEC) was used as a IR absorber, a laminated film was produced and subjected to the various tests. The results are shown in Table 4.

Comparative Example 4

In the same manner as in Example 11 except that silicon oxide (Trade name: SNOW MARK SP-3 manufactured by KINSEI MATEC) was used as a IR absorber in an amount of 14 wt. %, a laminated film was produced and subjected to the various tests. The results are shown in Table 4.

Table 1

| | Example 1 | | | Example 2 | | | Example 3 | | | Example 4 | | |
|---|---|---|---|---|---|---|---|---|---|---|---|---|
| Layer | B | A | C | B | A | C | B | A | C | B | A | C |
| Thickness (µm) | 15 | 45 | 15 | 15 | 45 | 15 | 15 | 45 | 15 | 15 | 45 | 15 |
| [Composition] | | | | | | | | | | | | |
| Resin | | | | | | | | | | | | |
| D2011 (VA 5%) | 96.9 | | 96.9 | 96.9 | | 96.9 | 96.9 | | 96.9 | 96.9 | | 96.9 |
| H2020 (VA 15 %) | | 81.0 | | | 77.0 | | | 81.0 | | | 81.0 | |
| H2031 (VA 19 %) | | | | | | | | | | | | |
| IR absorber | | | | | | | | | | | | |
| DHT-4A | | 16.0 | | | 20.0 | | | | | | | |
| MIZUKALAK | | | | | | | | 16.0 | | | | |
| SILTON AMT-08 | | | | | | | | | | | 16.0 | |
| SNOW MARK SP-3 | | | | | | | | | | | | |
| Anti-dripping agent | | | | | | | | | | | | |
| MGMS | 0.2 | 0.2 | 0.2 | 0.2 | 0.2 | 0.2 | 0.2 | 0.2 | 0.2 | 0.2 | 0.2 | 0.2 |
| DGDS | 1.0 | 1.0 | 1.0 | 1.0 | 1.0 | 1.0 | 1.0 | 1.0 | 1.0 | 1.0 | 1.0 | 1.0 |
| DGSO | 0.8 | 0.8 | 0.8 | 0.8 | 0.8 | 0.8 | 0.8 | 0.8 | 0.8 | 0.8 | 0.8 | 0.8 |
| Surfactant | | | | | | | | | | | | |
| DS 403 | | | | | | | | | | | | |
| UV-light absorber | | | | | | | | | | | | |
| SUMISORB 130 | 0.1 | 0.1 | 0.1 | 0.1 | 0.1 | 0.1 | 0.1 | 0.1 | 0.1 | 0.1 | 0.1 | 0.1 |
| Anti-oxidant | | | | | | | | | | | | |
| IRGANOX 1010 | 0.2 | 0.2 | 0.2 | 0.2 | 0.2 | 0.2 | 0.2 | 0.2 | 0.2 | 0.2 | 0.2 | 0.2 |
| Light stabilizer | | | | | | | | | | | | |
| TINUVIN 622-LD | 0.6 | 0.6 | 0.6 | 0.6 | 0.6 | 0.6 | 0.6 | 0.6 | 0.6 | 0.6 | 0.6 | 0.6 |
| Lubricant | | | | | | | | | | | | |
| Stearic amide | 0.2 | 0.2 | 0.2 | 0.2 | 0.2 | 0.2 | 0.2 | 0.2 | 0.2 | 0.2 | 0.2 | 0.2 |
| Anti-blocking agent | | | | | | | | | | | | |
| SILTON PF-06 | 0.1 | | 0.1 | 0.1 | | 0.1 | 0.1 | | 0.1 | 0.1 | | 0.1 |

Table 1 (continued)

| | Example 1 | Example 2 | Example 3 | Example 4 |
|---|---|---|---|---|
| Transmission of all light | 92 | 92 | 92 | 92 |
| HAZE (%) | 10 | 11 | 14 | 14 |
| ΔHAZE (%) | 7 | 6 | 8 | 7 |
| IR absorbance (%) | 73 | 77 | 74 | 70 |
| Mist-preventing property | Δ | Δ | Δ | Δ |
| Anti-dripping property (high temp./ low temp.) | O/O | O/O | O/O | O/O |
| Weather resistance | O | O | O | O |

Table 2

| | Example 5 | | | Example 6 | | | Example 7 | | | Example 8 | | |
|---|---|---|---|---|---|---|---|---|---|---|---|---|
| Layer | B | A | C | B | A | C | B | A | C | B | A | C |
| Thickness (µm) | 15 | 45 | 15 | 15 | 45 | 15 | 15 | 45 | 15 | 15 | 45 | 15 |
| [Composition] | | | | | | | | | | | | |
| Resin | | | | | | | | | | | | |
| D2011 (VA 5%) | 96.9 | | 96.9 | 96.9 | | 96.9 | 96.8 | | 96.8 | 98.9 | | 98.9 |
| H2020 (VA 15 %) | | | | | 81.0 | | | 80.9 | | | 83.0 | |
| H2031 (VA 19 %) | | 81.0 | | | | | | | | | | |
| IR absorber | | | | | | | | | | | | |
| DHT-4A | | 16.0 | | | 16.0 | | | | | | | |
| MIZUKALAK | | | | | | | | 16.0 | | | 16.0 | |
| SILTON AMT-08 | | | | | | | | | | | | |
| SNOW MARK SP-3 | | | | | | | | | | | | |
| Anti-dripping agent | | | | | | | | | | | | |
| MGMS | 0.2 | 0.2 | 0.2 | 0.4 | 0.4 | 0.4 | 0.2 | 0.2 | 0.2 | | | |
| DGDS | 1.0 | 1.0 | 1.0 | 1.6 | 1.6 | 1.6 | 1.0 | 1.0 | 1.0 | | | |
| DGSO | 0.8 | 0.8 | 0.8 | | | | 0.8 | 0.8 | 0.8 | | | |
| Surfactant | | | | | | | | | | | | |
| DS 403 | | | | | | | 0.1 | 0.1 | 0.1 | | | |
| UV-light absorber | | | | | | | | | | | | |
| SUMISORB 130 | 0.1 | 0.1 | 0.1 | 0.1 | 0.1 | 0.1 | 0.1 | 0.1 | 0.1 | 0.1 | 0.1 | 0.1 |
| Anti-oxidant | | | | | | | | | | | | |
| IRGANOX 1010 | 0.2 | 0.2 | 0.2 | 0.2 | 0.2 | 0.2 | 0.2 | 0.2 | 0.2 | 0.2 | 0.2 | 0.2 |
| Light stabilizer | | | | | | | | | | | | |
| TINUVIN 622-LD | 0.6 | 0.6 | 0.6 | 0.6 | 0.6 | 0.6 | 0.6 | 0.6 | 0.6 | 0.6 | 0.6 | 0.6 |
| Lubricant | | | | | | | | | | | | |
| Stearic amide | 0.2 | 0.2 | 0.2 | 0.2 | 0.2 | 0.2 | 0.2 | 0.2 | 0.2 | 0.2 | 0.2 | 0.2 |
| Anti-blocking agent | | | | | | | | | | | | |
| SILTON PF-06 | 0.1 | | 0.1 | 0.1 | | 0.1 | 0.1 | | 0.1 | 0.1 | | 0.1 |

Table 2 (continued)

| | Example 5 | Example 6 | Example 7 | Example 8 |
|---|---|---|---|---|
| Transmission of all light | 92 | 92 | 92 | 92 |
| HAZE (%) | 11 | 10 | 14 | 14 |
| ΔHAZE (%) | 6 | 47 | 8 | 1 |
| IR absorbance (%) | 76 | 73 | 74 | 74 |
| Mist-preventing property | Δ | X | O | O |
| Anti-dripping property (high temp./ low temp.) | O/O | O/Δ | O/O | X/X |
| Weather resistance | O | O | O | O |

Table 3

| | Example 9 | | | Example 10 | | | Comp. Example 1 | | | Comp. Example 2 | | |
|---|---|---|---|---|---|---|---|---|---|---|---|---|
| Layer | B | A | C | B | A | C | B | A | C | B | A | C |
| Thickness (μm) | 20 | 60 | 20 | 30 | 90 | 30 | 15 | 45 | 15 | 15 | 45 | 15 |
| [Composition] | | | | | | | | | | | | |
| Resin | | | | | | | | | | | | |
| D2011 (VA 5%) | 96.9 | | 96.9 | 96.9 | | 96.9 | 96.9 | | 96.9 | 96.9 | | 96.9 |
| H2020 (VA 15 %) | | 81.0 | | | 81.0 | | | 87.0 | | | 87.0 | |
| H2031 (VA 19 %) | | | | | | | | | | | | |
| IR absorber | | | | | | | | | | | | |
| DHT-4A | | | | | | | | 10.0 | | | 10.0 | |
| MIZUKALAK | | 16.0 | | | 16.0 | | | | | | | |
| SILTON AMT-08 | | | | | | | | | | | | |
| SNOW MARK SP-3 | | | | | | | | | | | | |
| Anti-dripping agent | | | | | | | | | | | | |
| MGMS | 0.2 | 0.2 | 0.2 | 0.2 | 0.2 | 0.2 | 0.2 | 0.2 | 0.2 | 0.4 | 0.4 | 0.4 |
| DGDS | 1.0 | 1.0 | 1.0 | 1.0 | 1.0 | 1.0 | 1.0 | 1.0 | 1.0 | 1.6 | 1.6 | 1.6 |
| DGSO | 0.8 | 0.8 | 0.8 | 0.8 | 0.8 | 0.8 | 0.8 | 0.8 | 0.8 | | | |
| Surfactant | | | | | | | | | | | | |
| DS 403 | | | | | | | | | | | | |
| UV-light absorber | | | | | | | | | | | | |
| SUMISORB 130 | 0.1 | 0.1 | 0.1 | 0.1 | 0.1 | 0.1 | 0.1 | 0.1 | 0.1 | 0.1 | 0.1 | 0.1 |
| Anti-oxidant | | | | | | | | | | | | |
| IRGANOX 1010 | 0.2 | 0.2 | 0.2 | 0.2 | 0.2 | 0.2 | 0.2 | 0.2 | 0.2 | 0.2 | 0.2 | 0.2 |
| Light stabilizer | | | | | | | | | | | | |
| TINUVIN 622-LD | 0.6 | 0.6 | 0.6 | 0.6 | 0.6 | 0.6 | 0.6 | 0.6 | 0.6 | 0.6 | 0.6 | 0.6 |
| Lubricant | | | | | | | | | | | | |
| Stearic amide | 0.2 | 0.2 | 0.2 | 0.2 | 0.2 | 0.2 | 0.2 | 0.2 | 0.2 | 0.2 | 0.2 | 0.2 |
| Anti-blocking agent | | | | | | | | | | | | |
| SILTON PF-06 | 0.1 | | 0.1 | 0.1 | | 0.1 | 0.1 | | 0.1 | 0.1 | | 0.1 |

Table 3 (continued)

| | Example 9 | Example 10 | Comp. Example 1 | Comp. Example 2 |
|---|---|---|---|---|
| Transmission of all light | 92 | 92 | 92 | 92 |
| HAZE (%) | 15 | 15 | 9 | 9 |
| ΔHAZE (%) | 7 | 6 | 7 | 51 |
| IR absorbance (%) | 80 | 84 | 66 | 66 |
| Mist-preventing property | Δ | Δ | Δ | X |
| Anti-dripping property (high temp./ low temp.) | O/O | O/O | O/O | O/Δ |
| Weather resistance | O | O | O | O |

Table 4

| | Comp. Example 3 | | |
|---|---|---|---|
| Layer | B | A | C |
| Thickness (μm) | 15 | 45 | 15 |
| [Composition] | | | |
| Resin | | | |
| D2011 (VA 5%) | 96.9 | | 96.9 |
| H2020 (VA 15 %) | | 81.0 | |
| H2031 (VA 19 %) | | | |
| IR absorber | | | |
| DHT-4A | | | |
| MIZUKALAK | | | |
| SILTON AMT-08 | | | |
| SNOW MARK SP-3 | | 16.0 | |
| Anti-dripping agent | | | |
| MGMS | 0.2 | 0.2 | 0.2 |
| DGDS | 1.0 | 1.0 | 1.0 |
| DGSO | 0.8 | 0.8 | 0.8 |
| Surfactant | | | |
| DS 403 | | | |
| UV-light absorber | | | |
| SUMISORB 130 | 0.1 | 0.1 | 0.1 |
| Anti-oxidant | | | |
| IRGANOX 1010 | 0.2 | 0.2 | 0.2 |
| Light stabilizer | | | |
| TINUVIN 622-LD | 0.6 | 0.6 | 0.6 |
| Lubricant | | | |
| Stearic amide | 0.2 | 0.2 | 0.2 |
| Anti-blocking agent | | | |
| SILTON PF-06 | 0.1 | | 0.1 |
| Transmission of all light | 92 | | |
| HAZE (%) | 37 | | |
| ΔHAZE (%) | 8 | | |
| IR absorbance (%) | 64 | | |
| Mist-preventing property | O | | |
| Anti-dripping property (high temp./ low temp.) | O/O | | |
| Weather resistance | O | | |

Table 5

| | Example 11 | | | Example 12 | | | Example 13 | | | Comp. Example 4 | | |
|---|---|---|---|---|---|---|---|---|---|---|---|---|
| Layer | B | A | C | B | A | C | B | A | C | B | A | C |
| Thickness (μm) | 20 | 60 | 20 | 20 | 60 | 20 | 20 | 60 | 20 | 20 | 60 | 20 |
| [Composition] | | | | | | | | | | | | |
| Resin | | | | | | | | | | | | |
| D2011 (VA 5%) | 99.2 | | 99.2 | 99.2 | | 99.2 | 99.2 | | 99.2 | 99.2 | | 99.2 |
| H2020 (VA 15 %) | | 83.2 | | | 83.2 | | | 83.2 | | | 85.2 | |
| IR absorber | | | | | | | | | | | | |
| MIZUKALAK | | 16.0 | | | 16.0 | | | 16.0 | | | | |
| SNOW MARK SP-3 | | | | | | | | | | | 14.0 | |
| UV-light absorber | | | | | | | | | | | | |
| SUMISORB 130 | 0.1 | 0.1 | 0.1 | 0.1 | 0.1 | 0.1 | 0.1 | 0.1 | 0.1 | 0.1 | 0.1 | 0.1 |
| Anti-oxidant | | | | | | | | | | | | |
| IRGANOX 1010 | 0.1 | 0.1 | 0.1 | 0.1 | 0.1 | 0.1 | 0.1 | 0.1 | 0.1 | 0.2 | 0.2 | 0.2 |
| Light stabilizer | | | | | | | | | | | | |
| TINUVIN 622-LD | 0.6 | 0.6 | 0.6 | 0.6 | 0.6 | 0.6 | 0.6 | 0.6 | 0.6 | 0.6 | 0.6 | 0.6 |
| Transmission of all light | 92 | | | 92 | | | 92 | | | 91 | | |
| HAZE (%) | 15 | | | 15 | | | 15 | | | 37 | | |
| ΔHAZE (%) | 1 | | | 0 | | | 0 | | | 1 | | |
| IR absorbance (%) | 80 | | | 80 | | | 80 | | | 68 | | |
| Mist-preventing property | O | | | O | | | O | | | O | | |
| Anti-dripping property (high temp./ low temp.) | O/O | | | O/O | | | O/O | | | O/O | | |
| Weather resistance | O | | | O | | | O | | | O | | |

Notes for Tables 1-5:

IR absorbers:

DHT-4A: Hydrotalcite manufactured KYOWA Chemical Industries, Ltd.

MIZUKALAK: Lithium-aluminum compound hydroxide manufactured by MIZUSAWA Chemical Industries, Ltd.

SILTON AMT-08: Aluminosilicate manufactured by MIZUSAWA Chemical Industries, Ltd.

SNOW MARK SP-3: Silicon oxide manufactured by KINSEI MATEC.

Anti-dripping agents:

MGMS: Monoglycerol monostearate manufactured by MARUBISHI YUKA Co., Ltd.

DGDS: Diglycerol distearate manufactured by MARUBISHI YUKA Co., Ltd.

DGSO: Diglycerol sesquioleate manufactured by MARUBISHI YUKA Co., Ltd.

Anti-blocking agent: SILTON PF06 (silicon oxide) manufactured by MIZUSAWA Chemical Industries, Ltd.

Example 14

In the same manner as in Example 7 except that, in Resin Composition (1), an ethylene-vinyl acetate copolymer (Trade name: EVATATE H 2031 manufactured by Sumitomo Chemical Co., Ltd. Vinyl acetate content: 19 wt. %) was used, 0.2 wt. % of monoglycerol monostearate, 1.1 wt. % of diglycerol distearate and 1.0 wt. % of diglycerol sesquioleate were used as anti-dripping agents, and 11.0 wt. % of lithium aluminum double hydroxide (Trade name: MIZUKALAK manufactured by MIZUSAWA Chemical Industries, Ltd.) was used as a IR absorber; and in Resin Composition (2), 0.2 wt. % of monoglycerol monostearate, 1.1 wt. % of diglycerol distearate and 1.0 wt. % of diglycerol sesquioleate were used as anti-dripping agents, a laminate film comprising Layer A having a thickness of 0.049 mm, and Layers B and C each having a thickness of 0.013 mm (total thickness of 0.075 mm) was prepared. The properties are as follows:

| | |
|---|---|
| Transmission of all light: | 92 % |
| HAZE: | 12 % |
| ΔHAZE: | 6 |
| IR absorbance: | 72 % |

Other properties were the same as those in Example 7.

Further, the long-term (3 months) anti-dripping property at high temperature was good.

Example 15

In the same manner as in Example 14 except that 3 wt. % of a hydrotalcite (Trade name: DHT-4A manufactured by KYOWA Chemical Industries, Ltd.) and 8 wt. % of lithium aluminum double hydroxide (Trade name: MIZUKALAK manufactured by MIZUSAWA Chemical Industries, Ltd.) was used as IR absorbers in Resin Composition (1), a laminate film was prepared. The properties are as follows:

| | |
|---|---|
| Transmission of all light: | 92 % |
| HAZE: | 12 % |
| ΔHAZE: | 6 |
| IR absorbance: | 72 % |

Other properties were the same as those in Example 7.

Further, the long-term (3 months) anti-dripping property at high temperature was good.

Example 16

In the same manner as in Example 14 except that 9 wt. % of lithium aluminum double hydroxide (Trade name: MIZUKALAK manufactured by MIZUSAWA Chemical Industries, Ltd.) was used as a IR absorber in Layer A and 3 wt. % of a hydrotalcite (Trade name: DHT-4A manufactured by KYOWA Chemical Industries, Ltd.) was used as a IR absorber in Layers B and C, a laminate film comprising Layer A having a thickness of 0.053 mm, and Layers B and C each having a thickness of 0.011 mm (total thickness of 0.075 mm) was prepared. The properties are as follows:

| | |
|---|---|
| Transmission of all light: | 92 % |
| HAZE: | 14 % |
| ΔHAZE: | 5 |
| IR absorbance: | 72 % |

Other properties were the same as those in Example 7.

Further, the long-term (3 months) anti-dripping property at high temperature was good.

Example 17

In the same manner as in Example 16 except that 35 wt. % of lithium aluminum double hydroxide (Trade name: MIZUKALAK manufactured by MIZUSAWA Chemical Industries, Ltd.) is used as a IR absorber in Layer A and 5 wt. % of a hydrotalcite (Trade name: DHT-4A manufactured by KYOWA Chemical Industries, Ltd.) is used as a IR absorber in Layers B and C, a laminate film is prepared. The laminate film has the excellent IR absorbance and transparency.

Example 18

In the same manner as in Example 11 except that, in Resin Composition (3), an ethylene-vinyl acetate copolymer (Trade name: EVATATE H 2031 manufactured by Sumitomo Chemical Co., Ltd. Vinyl acetate content: 19 wt. %) was used, and 13 wt. % of lithium aluminum double hydroxide (Trade name: MIZUKALAK manufactured by MIZUSAWA Chemical Industries, Ltd.) was used as a IR absorber, a laminate film was prepared. The properties are as follows:

| | |
|---|---|
| Transmission of all light: | 92 % |
| HAZE: | 12 % |
| ΔHAZE: | 1 |
| IR absorbance: | 79 % |

Other properties were the same as those in Example 11.

Example 19

In the same manner as in Example 18 except that an anti-fogging covering film of Example 13 was used, a laminate film was prepared. The properties are as follows:

| | |
|---|---|
| Transmission of all light: | 92 % |
| HAZE. | 13 % |
| ΔHAZE: | 0 |
| IR absorbance: | 79 % |

Other properties were the same as those in Example 11.

Example 20

In a green house covered with the film produced in Example 13 (a test area), a growing test was carried out on melon (kind: Andes melon) in Kumamoto Prefecture, Japan by the following procedure and conditions:

- Seeding in the middle of December
- Painting seedlings permanently in the middle of January, next year
- Harvesting in the middle of May
- Heating the green house with oil heaters from the permanent planting to the end of March to keep the lowest temperature at 10°C.

For comparison, in a green house covered with an agricultural polyvinyl chloride film ("NOBI ACE KIRINAIN" manufactured by MITSUBISHI CHEMICAL MKV, Co., Ltd. Film thickness: 100 μm. HAZE value: 3 %. IR absorbance: 74 %. IR absorbance at the film thickness of 75 μm: 69 %) (a comparative area), the same test as above was carried out.

In the test area, the melon harvested in the middle of May had good quality, and an amount of consumed kerosene was about 1000 liters, which was about 100 liters smaller than that consumed in the comparative area.

Further, the film of Example 13 was excellent so that the light transmission in the green house of the test area using the film of Example 13 measured in a cloudy day in May was 60 %, while that in the comparative area was 56 %.

**Claims**

1. A polyolefin resin covering film comprising a first layer which comprises a polyolefin resin and second and third layers which are provided on respective sides of said first layer and comprise a polyolefin resin comprising 20 wt. % or less of a polar group-containing vinyl monomer, wherein said polyolefin resin covering film contains 6 to 50 wt. % of a IR absorber based on the weight of the covering film, and has a IR absorbance of 70 to 85 % at 27°C in

terms of a radiation absorbing energy at a film thickness of 75 μm with the black-body radiation absorbing energy being 100 %.

2. The polyolefin resin covering film according to claim 1, wherein said IR absorber is contained in said first layer.

3. The polyolefin resin covering film according to claim 1 or 2, wherein said IR absorber is at least one compound selected from hydrotalcite compounds, lithium-aluminum double hydroxides and aluminosilicates.

4. The polyolefin resin covering film according to any of claims 1 to 3, which further contains 0.5 to 4 wt.% of an anti-dripping agent.

5. The polyolefin resin covering film according to claim 4, wherein said anti-dripping agent is in a liquid state at room temperature and contained in an amount of 0.2 to 3 wt. %.

6. The polyolefin resin covering film according to claim 5, wherein said anti-dripping agent which is in the liquid state at room temperature is at least one compound selected from sorbitan fatty acid ester surfactants and glycerol fatty acid ester surfactants.

7. The polyolefin resin covering film according to any one of claims 1 to 6, which further contains at least one additive selected from of 0.02 to 5 wt. % of a hindered amine compound, 0.01 to 3 wt. % of a UV absorber, and 0.01 to 3 wt. % of a mist-preventing agent.

8. The polyolefin resin covering film according to any one of claims 1 to 6, which has ΔHAZE of 110 % or less, where ΔHAZE is a difference between a HAZE value just after production of the film and that after storing the film at 23°C for 90 days.

9. The polyolefin resin covering film according to claim 1 or 2, which has an anti-fogging coating on at least on surface of said covering film, wherein a HAZE value of the covering film which is stored at room temperature for 3 months is 110 % or less of the HAZE value of the covering film just after the production.

10. The polyolefin resin covering film according to claim 7, 8 or 9, which has a thickness of 0.02 to 0.3 mm.

11. A method for raising a strong-light produce comprising growing said strong-light produce in a green house or tunnel which is covered with a polyolefin resin covering film comprising a first layer which comprises a polyolefin resin and second and third layers which are provided on respective sides of said first layer and comprise a polyolefin resin comprising 20 wt. % or less of a polar group-containing vinyl monomer, wherein said polyolefin resin covering film contains 6 to 50 wt. % of a IR absorber based on the weight of the covering film, and has a IR absorbance of 70 to 85 % at 27°C in terms of a radiation absorbing energy at a film thickness of 75 μm with the black-body radiation absorbing energy being 100 %.

12. The method according to claim 11, wherein said strong-light produce is melon, water melon and/or strawberry.

European Patent Office

# EUROPEAN SEARCH REPORT

Application Number
EP 96 10 8928

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
| --- | --- | --- | --- |
| X<br><br><br><br>A | US-A-4 542 061 (FUKUSHIMA NOBUO ET AL) 17 September 1985<br>* column 2, line 41 - column 7, line 19 *<br>* column 7, line 64 - column 8, line 50 * | 1-4,7,11,12<br><br><br><br>5,6 | B32B27/18<br>A01G9/14 |
| X<br><br><br><br><br><br>A | EP-A-0 479 277 (SUMITOMO CHEMICAL CO) 8 April 1992<br>* page 2, line 1 - line 10 *<br>* page 3, line 2 - line 21 *<br>* page 3, line 53 - line 58 *<br>* page 4, line 26 - line 43; example 1 * | 1,2,10<br><br><br><br><br><br>4-9,11 | |
| X<br><br><br><br>A | US-A-4 490 502 (FUKUSHIMA NOBUO ET AL) 25 December 1984<br>* column 2, line 4 - line 60 *<br>* column 3, line 6 - column 7, line 47 * | 1-4,11,12<br><br><br><br>5-7 | |
| A | US-A-4 686 791 (MIYATA SHIGEO) 18 August 1987<br>* the whole document * | 4-9,11 | TECHNICAL FIELDS SEARCHED (Int.Cl.6)<br>B32B<br>A01G |

The present search report has been drawn up for all claims

| Place of search | Date of completion of the search | Examiner |
| --- | --- | --- |
| THE HAGUE | 2 December 1996 | Ibarrola Torres, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)